# EUROPÄISCHE PATENTANMELDUNG

(11) **EP 4 046 922 A1**
(43) Veröffentlichungstag der Anmeldung: **24.08.2022**
(21) Anmeldenummer: 21215847.1
(22) Anmeldetag: 20.12.2021
(51) Int. Cl.: B65B 21/18, B25J 15/00, B65B 21/20, B65B 35/36, B65B 59/00, B65B 59/04, B65G 47/90

(54) **VERPACKUNGSROBOTER UND VERFAHREN ZUM DURCHFÜHREN EINES VERPACKUNGSPROZESSES**

(30) Priorität: 17.02.2021 DE 102021103751
(71) Anmelder: Krones Aktiengesellschaft, 93073 Neutraubling (DE)
(72) Erfinder: CANALICCHIO, Christian, 93073 Neutraubling (DE); DENNEMARCK, Peter, 93073 Neutraubling (DE); FELLER, Simon, 93073 Neutraubling (DE); GUT, Tobias, 93073 Neutraubling (DE); PRINZ, Markus, 93073 Neutraubling (DE); STADLER, Thomas, 93073 Neutraubling (DE)
(74) Vertreter: Benninger, Johannes

(57) **Zusammenfassung**

Es ist ein Verpackungsroboter für Artikel wie Getränkebehälter oder dergleichen offenbart. Der Verpackungsroboter umfasst eine Brücke (3) sowie mindestens zwei an der Brücke angeordnete Werkzeugaufnahmen (5), wobei die mindestens zwei an der Brücke (3) angeordneten Werkzeugaufnahmen (7) jeweils entlang der Brücke (3) bewegbar sind und jeweils einen Werkzeugkopf (7) aufnehmen können. Es ist vorgesehen, dass wenigstens eine Werkzeugaufnahme (5) der mindestens zwei an der Brücke (3) angeordneten Werkzeugaufnahmen (5) abgestimmt auf den jeweiligen durchzuführenden Verpackungsprozess wahlweise mit einem jeweiligen Werkzeugkopf (7) bestückbar ist. Auch ist vorgesehen, dass die wenigstens eine Werkzeugaufnahme (5) der mindestens zwei Werkzeugaufnahmen (5) unter Verbleib an der Brücke (3) in einen Stand-by-Modus wechseln kann, sofern der jeweilige über den Verpackungsroboter durchzuführende Verpackungsprozess keine Bestückung der wenigstens einen Werkzeugaufnahme (5) mit einem Werkzeugkopf (7) erfordert.

## Beschreibung

Die vorliegende Erfindung betrifft einen Verpackungsroboter und ein Verfahren zum Durchführen eines Verpackungsprozesses.

Bei einer Vielzahl von vorstellbaren Stationen im Bereich der Getränketechnologie besteht die Notwendigkeit, Getränkebehältnisse von einer Horizontalfördereinrichtung abzuführen und hierauf folgend an nachgeordnete Stationen weiterzuführen bzw. zu übergeben. Auch ist es zur Verpackung von Getränkebehältern häufig erforderlich, dass Umverpackungen aus einem Magazin entnommen, aufgezogen und auf einer Horizontalfördereinrichtung abgesetzt werden, um sodann Getränkebehälter in die Umverpackung einbringen zu können.

Insbesondere im Bereich der Packtechnik sind hierbei Einrichtungen aus dem Stand der Technik bekannt, bei welchen die jeweiligen Getränkebehältnisse mittels eines Verpackungsroboters von einer Horizontalfördereinrichtung entgegengenommen werden und hierauf in Verpackungseinheiten, wie Kartonagen, Getränkekästen oder dergleichen eingesetzt werden. Solche Verpackungsroboter besitzen häufig eine Vielzahl an Werkzeugköpfen, welchen Werkzeugköpfe zur Entgegennahme von Getränkebehältnissen oder zum Aufziehen von Umverpackungen ausgebildet und an einer Brücke hängend angeordnet sind.

Sofern Getränkebehältnisse mittels des Verpackungsroboters in eine jeweilige Verpackung überführt werden sollen, werden die Werkzeugköpfe entlang der Brücke bewegt und bringen nach Durchführen einer entsprechenden Bewegung Getränkebehältnisse in eine jeweilige Umverpackung ein. Bei gesamten Anlagen, welche Artikel vollständig verpacken können, sind häufig mehrere Verpackungsroboter vorgesehen, wobei ein jeweiliger Verpackungsroboter einen jeweiligen Verpackungsschritt ausführt.

So kann ein erster Verpackungsroboter beispielsweise dafür vorgesehen sein, entsprechende Kartonagen aufzufalten und auf einer Horizontalfördereinrichtung abzusetzen. Ein weiterer Verpackungsroboter kann Getränkebehälter aufnehmen und ggf. in die aufgefalteten und auf der Horizontalfördereinrichtung abgesetzten Kartonagen einsetzen.

Mittels eines jeweiligen Werkzeugkopfes eines Verpackungsroboters wird ggf. eine entsprechende Anzahl an Artikeln entgegengenommen, welche zum Einbringen in eine jeweilige Umverpackung vorgesehen ist. Sofern also ein Verpackungsroboter genau drei Werkzeugköpfe besitzt, können über diese genau drei Werkzeugköpfe in einem Schritt Artikel zum Einbringen in genau drei Umverpackungen entgegengenommen werden.

Sofern ein Verpackungsroboter genau vier Werkzeugköpfe besitzt, können über diese genau vier Werkzeugköpfe in einem Schritt Artikel zum Einbringen in genau vier Umverpackungen entgegengenommen werden. Solche Verpackungsroboter, wie sie für gattungsgemäße Anlagen verwendet werden, arbeiten taktweise, wobei eine jeweilige Konfiguration eines jeweiligen Verpackungsroboters auf den jeweiligen durchzuführenden Verpackungsprozess abgestimmt ist.

Sofern von einem Betrieb mit drei Werkzeugköpfen auf einen Betrieb mit vier Werkzeugköpfen und vice versa umgestellt werden soll, wird hierzu in der Praxis häufig der gesamte Verpackungsroboter oder zumindest eine Brücke ausgetauscht, an welcher Werkzeugaufnahmen für die jeweiligen Werkzeugköpfe angeordnet sind. Eine solche Umstellung kann notwendig sein, sofern beispielsweise ein Verpackungsformat geändert wird.

Wird der jeweilige Verpackungsroboter mit einer bisherigen Konfiguration weiterbetrieben, so muss mindestens mit einem stark verringerten Durchsatz gerechnet werden. Wünschenswert wären entsprechende Möglichkeiten zum Verpacken von Artikeln, welche sich durch eine größere Flexibilität bei einer solchen Formatumstellung auszeichnen.

Eine Aufgabe der Erfindung kann aus diesem Grunde darin gesehen werden, einen Verpackungsroboter sowie ein Verfahren zum Verpacken von Artikeln bereitzustellen, welche eine hohe Flexibilität im Hinblick auf eine Formatumstellung besitzen. Der Verpackungsroboter soll zudem einen unkomplizierten Aufbau besitzen. Das Verfahren soll zudem einfach umgesetzt werden können.

Die obige Aufgabe wird durch einen Verpackungsroboter und ein Verfahren gelöst, welche die Merkmale in den unabhängigen Ansprüchen besitzen. Weitere vorteilhafte Ausgestaltungen werden durch die Unteransprüche beschrieben.

Die Erfindung betrifft einen Verpackungsroboter für Artikel wie Getränkebehälter oder dergleichen. Die Getränkebehälter, welche mittels des Verpackungsroboters verpackt werden, können ggf. durch Getränkeflaschen und/oder durch Getränkedosen ausgebildet sein. Insbesondere kann es sich um PET-Getränkeflaschen und/oder um Glasflaschen handeln. Eine für die Artikel bzw. Getränkebehälter vorgesehene Verpackung kann beispielsweise als Kartonage oder als Getränkekiste oder als weitere Umverpackung ausgebildet sein, welche mehrere Artikel bzw. mehrere Getränkebehälter zusammenhält.

Der Verpackungsroboter umfasst eine Brücke sowie mindestens zwei an der Brücke angeordnete Werkzeugaufnahmen, wobei die mindestens zwei an der Brücke angeordneten Werkzeugaufnahmen jeweils entlang der Brücke bewegbar sind und jeweils einen Werkzeugkopf aufnehmen können. Die Brücke kann somit eine Linearführung für die mindestens zwei an der Brücke angeordneten Werkzeugaufnahmen ausbilden. Insbesondere kann es sein, dass die Brücke zur horizontalen Führung der mindestens zwei an der Brücke angeordneten Werkzeugaufnahmen ausgebildet ist.

Weiter kann der Verpackungsroboter eine Steuer- und/oder Regeleinrichtung besitzen, welcher Informationen zum jeweiligen durchzuführenden Verpackungsprozess vorgebbar sind. Die Steuer- und/oder Regeleinrichtung kann im Rahmen eines durchzuführenden Verpackungsprozesses mindestens zwei an der Brücke angeordnete Werkzeugaufnahmen ggf. derart ansteuern, dass die mindestens zwei an der Brücke angeordneten Werkzeugaufnahmen bei einem Arbeitstakt eine vorgebebene Relativbewegung zueinander ausführen und hierbei entlang der Brücke bewegt werden.

So können die mindestens zwei an der Brücke angeordneten Werkzeugaufnahmen im Rahmen eines Arbeitstaktes jeweils horizontal entlang der Brücke bewegt werden, wobei die mindestens zwei an der Brücke angeordneten Werkzeugaufnahmen hierbei ihren relativen Abstand zueinander vorerst vergrößern und zu einem späteren Zeitpunkt wieder verkleinern, indem die mindestens zwei Werkzeugaufnahmen sodann entlang der Brücke in horizontaler Richtung aufeinander zubewegt werden.

Auch kann es sein, dass der Verpackungsroboter als Portalsystem ausgebildet ist und dass der Verpackungsroboter die Brücke im Rahmen eines Arbeitstaktes zusammen mit den hieran angeordneten Werkzeugköpfen entlang eines vorgegebenen Arbeitsweges hin und her bewegt.

Es kann somit sein, dass
- der Verpackungsroboter als Portalsystem ausgebildet ist und dass der Verpackungsroboter die Brücke im Rahmen eines Arbeitstaktes zusammen mit den hieran angeordneten Werkzeugköpfen entlang eines vorgegebenen Arbeitsweges hin und her bewegt, wobei zeitlich überlagert
- mindestens zwei an der Brücke angeordnete Werkzeugaufnahmen mittels einer Steuer- und/oder Regeleinrichtung derart angesteuert werden, dass diese mindestens zwei an der Brücke angeordneten Werkzeugaufnahmen bei dem Arbeitstakt eine vorgegebene Relativbewegung zueinander ausführen und hierbei entlang der Brücke bewegt werden.

Der optional als Portalsystem ausgebildete Verpackungsroboter kann somit ggf. die Brücke zusammen mit den hieran angeordneten Werkzeugaufnahmen entlang einer vorgegebenen Arbeitsstrecke alternierend hin und her bewegen. So kann es beispielsweise sein, dass der Verpackungsroboter die Brücke zusammen mit den mindestens zwei an der Brücke angeordneten Werkzeugaufnahmen zwischen einem Zulauf, über welchen durch Getränkebehälter ausgebildete Artikel bereitgestellt werden und einer Horizontalfördereinrichtung, welche zum Transport von Umverpackungen ausgebildet ist, hin und her bewegt.

Während einer solchen alternierenden Bewegung können die mindestens zwei Werkzeugaufnahmen jeweils entlang der Brücke bewegt werden. Es kann hierbei sein, dass der Verpackungsroboter bei einer solchen alternierenden Bewegung Getränkebehälter vom Zulauf entgegennimmt und hierauf folgend die entgegengenommenen Getränkebehälter in Umverpackungen einbringt, welche sich auf einer Horizontalfördereinrichtung befinden.

Auch kann eine Ausführungsform eines Verpackungsroboters derart ausgebildet sein, dass der Verpackungsroboter bei einer solchen alternierenden Bewegung jeweils mehrere Umverpackungen aus einem Magazin entnimmt, aufzieht und auf einer Horizontalfördereinrichtung absetzt.

Es ist vorgesehen, dass die wenigstens eine Werkzeugaufnahme der mindestens zwei an der Brücke angeordneten Werkzeugaufnahmen abgestimmt auf den jeweiligen durchzuführenden Verpackungsprozess wahlweise mit einem jeweiligen Werkzeugkopf bestückbar ist. Weiter ist vorgesehen, dass die wenigstens eine Werkzeugaufnahme der mindestens zwei Werkzeugaufnahmen derart ausgebildet ist, dass die wenigstens eine Werkzeugaufnahme der mindestens zwei Werkzeugaufnahmen unter Verbleib an der Brücke in einen Stand-by-Modus wechseln kann, sofern der jeweilige über den Verpackungsroboter durchzuführende Verpackungsprozess keine Bestückung der wenigstens einen Werkzeugaufnahme mit einem Werkzeugkopf erfordert.

Vorteilhafterweise kann hierdurch eine Brücke mit mehreren Werkzeugaufnahmen für mehrere unterschiedliche Formate genutzt werden. Denkbar ist beispielsweise, dass ein Verpackungsroboter genau vier Werkzeugaufnahmen umfasst. An den genau vier Werkzeugaufnahmen können ggf. im Rahmen eines durchzuführenden Verpackungsprozesses genau vier Werkzeugköpfe angeordnet sein, so dass ein jeweiliger Werkzeugkopf eine für eine jeweilige Umverpackung vorgesehene Anzahl an Artikeln gemeinsam entgegennehmen und die jeweiligen entgegengenommenen Artikel in der entsprechenden Anzahl nach einer Bewegung entlang der Brücke in eine zugeordnete Umverpackung einbringen kann.

Sofern zu einem späteren Zeitpunkt ein Formatwechsel erfolgt, nach welchem genau drei Werkzeugköpfe zum Durchführen des jeweiligen Verpackungsprozesses erforderlich sind, kann die jeweilige Werkzeugaufnahme, welche nach dem Formatwechsel nicht mehr benötigt wird, in den Stand-by-Modus wechseln und weiterhin an der Brücke verbleiben.

Der Verpackungsroboter kann demnach unterschiedliche auf jeweilige Formate abgestimmte Verpackungsprozesse durchführen, ohne dass die Brücke mit den hieran angeordneten Werkzeugaufnahmen getauscht werden muss. Die für den jeweiligen Verpackungsprozess nicht erforderliche Werkzeugaufnahme kann in einen Stand-by-Modus bzw. Bereitschaftsmodus wechseln, aus welchem die wenigstens eine Werkzeugaufnahme bei einem Wechsel des Verpackungsprozesses jederzeit und ohne Vorbereitungen oder längere Wartezeiten wieder aktiviert werden kann, sofern ein jeweiliger über den Verpackungsroboter durchzuführender Verpackungsprozess einen Verpackungsschritt über einen an der wenigstens einen Werkzeugaufnahme anzuordnenden Werkzeugkopf vorsieht.

Es kann sein, dass ein jeweiliger Werkzeugkopf zum Durchführen des jeweiligen Verpackungsprozesses eine hydraulische, pneumatische und/oder elektrische Versorgung benötigt. Die hydraulische, pneumatische und/oder elektrische Versorgung kann mittels der mindestens zwei an der Brücke angeordneten Werkzeugaufnahmen für einen jeweiligen Werkzeugkopf bereitstellbar sein, welcher an der jeweiligen Werkzeugaufnahme angeordnet ist.

Es kann sein, dass die wenigstens eine Werkzeugaufnahme derart ausgebildet ist, dass die wenigstens eine Werkzeugaufnahme im Stand-by-Modus eine hydraulische, pneumatische und/oder elektrische Versorgung für einen Werkzeugkopf unterbindet bzw. dass die wenigstens eine Werkzeugaufnahme im Stand-by-Modus eine hydraulische, pneumatische und/oder elektrische Versorgung für einen Werkzeugkopf blockiert.

Ein jeweiliger Werkzeugkopf kann mehrere Saug- und/oder Greifelemente umfassen, mittels welchen Artikel bzw. Getränkebehälter entgegengenommen werden können. Die Saug- und/oder Greifelemente können beispielsweise durch sogenannte Packtulpen ausgebildet sein. Somit kann es sein, dass die mehreren Saug- und/oder Greifelement jeweils zur pneumatischen Entgegennahme eines jeweiligen Getränkebehälters ausgebildet sind.

Weiter kann ein solcher Werkzeugkopf über Zentrierelemente verfügen, welche Zentrierelemente die jeweiligen Getränkebehälter bei einem Einbringen in eine jeweilige Umverpackung unter Anlage führen. Der Verpackungsroboter kann daher in einer Ausführungsform zur Entgegennahme von Artikeln und zum Einbringen von entgegengenommenen Artikeln in eine jeweilige Umverpackung ausgebildet sein. Auch bei solchen Ausführungsformen hat es sich bewährt, wenn der Verpackungsroboter als Portalsystem ausgebildet ist.

Alternativ hierzu ist jedoch auch vorstellbar, dass es sich bei dem Verpackungsroboter um einen Mehrachsroboter oder um eine weitere Handhabungseinrichtung handelt.

Auch kann ein jeweiliger Werkzeugkopf mindestens ein Arbeitswerkzeug zur Entgegennahme und zum Aufziehen einer zum Einbringen von Artikeln bzw. zum Einbringen von Getränkebehältern vorgesehenen Umverpackung umfassen. Der Verpackungsroboter kann daher in einer Ausführungsform zur Handhabung von Umverpackungen ausgebildet sein, welche zum Einbringen von Artikeln bzw. zum Einbringen von Getränkebehältern vorgesehen sind.

Auch bei solchen Ausführungsformen hat es sich bewährt, wenn der Verpackungsroboter als Portalsystem ausgebildet ist. Alternativ hierzu ist jedoch auch vorstellbar, dass es sich bei dem Verpackungsroboter um einen Mehrachsroboter oder um eine weitere Handhabungseinrichtung handelt.

Sofern die jeweilige wenigstens Werkzeugaufnahme in den Stand-by-Modus gewechselt hat bzw. sofern sich die jeweilige wenigstens eine Werkzeugaufnahme im Stand-by-Modus befindet, kann es sein, dass an der wenigstens einen Werkzeugaufnahme weiterhin ein Werkzeugkopf angeordnet ist, welcher zum Durchführen des jeweiligen Verpackungsprozesses nicht benötigt wird, während des Durchführens des jeweiligen Verpackungsprozesses jedoch weiterhin an der im Stand-by-Modus befindlichen Werkzeugaufnahme verbleibt.

Auch kann es sein, dass die jeweilige wenigstens eine Werkzeugaufnahme in den Stand-by-Modus wechselt und dass der bis dahin an der wenigstens einen Werkzeugaufnahme angeordnete Werkzeugkopf von der wenigstens einen Werkzeugaufnahme abgenommen wird, bevor der Verpackungsroboter den jeweiligen Verpackungsprozess durchführt.

Beispielsweise kann es sein, dass die wenigstens eine Werkzeugaufnahme der mindestens zwei an der Brücke angeordneten Werkzeugaufnahmen im Stand-by-Modus in einer Warteposition unbeweglich an der Brücke angeordnet ist. Die Warteposition kann derart ausgebildet sein, dass keine der noch verbleibenden Werkzeugaufnahmen mit der wenigstens einen in der Warteposition angeordneten Werkzeugaufnahmen kollidiert, wenn der Verpackungsroboter seinen jeweiligen Verpackungsprozess durchführt.

Die Warteposition kann sich in einem Randbereich der Brücke befinden, so dass an der wenigstens einen Werkzeugaufnahme in der Warteposition ein Werkzeugkopf angeordnet werden kann, sofern ein zu einem späteren Zeitpunkt über den Verpackungsroboter durchzuführender Verpackungsprozess dies erfordert. Die bis dahin in der Warteposition angeordnete Werkzeugaufnahme kann sodann aus dem Stand-by-Modus in einen aktiven Zustand wechseln und die Warteposition verlassen.

Insbesondere kann die Warteposition derart ausgebildet sein, dass ein Benutzer einen an der wenigstens einen in der Warteposition befindlichen Werkzeugaufnahme angeordneten Werkzeugkopf von der wenigstens einen in der Warteposition befindlichen Werkzeugaufnahme abnehmen kann.

Auch kann der Verpackungsroboter mindestens einen Pneumatikzylinder und/oder mindestens einen Servoantrieb umfassen, welcher mindestens eine Pneumatikzylinder und/oder welcher mindestens eine Servoantrieb die wenigstens eine Werkzeugaufnahme in die Warteposition überführen kann, in welcher die wenigstens eine Werkzeugaufnahme unbeweglich an der Brücke angeordnet ist. Der mindestens eine Pneumatikzylinder und/oder der mindestens eine Servoantrieb kann ggf. die wenigstens eine Werkzeugaufnahme in die Warteposition überführen, indem der mindestens eine Pneumatikzylinder und/oder der mindestens eine Servoantrieb die wenigstens eine Werkzeugaufnahme entlang der Brücke in die Warteposition schiebt.

Alternativ oder ergänzend hierzu kann vorgesehen sein, dass der Verpackungsroboter mindestens einen Linearmotor umfasst, welcher mindestens eine Linearmotor die wenigstens eine Werkzeugaufnahme in die Warteposition überführen kann, in welcher die wenigstens eine Werkzeugaufnahme unbeweglich an der Brücke angeordnet ist.

Weiter kann es sein, dass die wenigstens eine Werkzeugaufnahme der mindestens zwei Werkzeugaufnahmen im Stand-by-Modus entlang der Brücke bewegbar ausgebildet ist. Somit kann die wenigstens eine Werkzeugaufnahme weiterhin mit den verbleibenden Werkzeugaufnahmen während des jeweiligen über den Verpackungsroboter durchzuführenden Verpackungsprozesses mitbewegt werden, auch wenn der jeweilige über den Verpackungsroboter durchzuführende Verpackungsprozess keine Bestückung der wenigstens einen Werkzeugaufnahme mit einem Werkzeugkopf erfordert.

Bewährt haben sich Ausführungsformen, bei welchen die wenigstens eine Werkzeugaufnahme einen Schnellwechselmechanismus umfasst, über welchen Schnellwechselmechanismus ein Werkzeugkopf vorzugsweise werkzeuglos an der wenigstens einen Werkzeugaufnahme angeordnet werden kann und/oder über welchen Schnellwechselmechanismus ein Werkzeugkopf vorzugsweise werkzeuglos von der wenigstens einen Werkzeugaufnahme abgenommen werden kann.

Bewährt hat es sich beispielsweise, wenn der Schnellwechselmechanismus derart ausgebildet ist, dass der Werkzeugkopf vorzugsweise werkzeuglos in die wenigstens eine Werkzeugaufnahme eingehängt werden kann und/oder dass der Werkzeugkopf vorzugsweise werkzeuglos von der wenigstens einen Werkzeugaufnahme abgezogen werden kann.

Es kann sein, dass der Schnellwechselmechanismus eine Rast- Schnapp- und/oder Klemmverbindung zum lösbaren Festsetzen eines jeweiligen Werkzeugkopfes an der wenigstens einen Werkzeugaufnahme umfasst.

Weiter kann es sein, dass die mindestens zwei an der Brücke angeordneten Werkzeugaufnahmen jeweils eine vorzugsweise elektrische und/oder pneumatische Energieversorgung für einen Werkzeugkopf bereitstellen können, wobei die wenigstens eine Werkzeugaufnahme derart ausgebildet ist, dass die für den jeweiligen Werkzeugkopf bereitstellbare vorzugsweise pneumatische und/oder elektrische Energieversorgung im Stand-by-Modus abgeschaltet oder deaktiviert ist.

Der Verpackungsroboter kann eine Steuer- und/oder Regeleinrichtung umfassen, welche mit der wenigstens einen Werkzeugaufnahme derart in Verbindung steht, dass die Steuer- und/oder Regeleinrichtung die für den jeweiligen Werkzeugkopf bereitstellbare vorzugsweise pneumatische und/oder elektrische Energieversorgung im Stand-by-Modus selbständig abschaltet.

Die Erfindung betrifft zudem ein Verfahren zum Durchführen eines Verpackungsprozesses für Artikel wie Getränkebehälter oder dergleichen. Merkmale, welche vorhergehend bereits zu diversen Ausführungsformen des Verpackungsroboters beschrieben wurden, können ebenso bei den nachfolgend beschriebenen Ausführungsformen des erfindungsgemäßen Verfahrens vorgesehen sein und werden nicht mehrfach erwähnt. Ebenso können nachfolgend zu den diversen Ausführungsformen des Verfahrens beschriebenen Merkmale bei diversen Ausführungsformen des vorhergehend bereits beschriebenen Verpackungsroboters vorgesehen sein. In diversen Ausführungsformen kann der vorherig beschriebene Verpackungsroboter zum Durchführen der Ausführungsformen des nachfolgend beschriebenen Verfahrens ausgebildet sein.

Bei dem Verfahren ist ein Verpackungsroboter mit einer Brücke sowie mindestens zwei an der Brücke angeordneten Werkzeugaufnahmen vorgesehen, welche mindestens zwei an der Brücke angeordneten Werkzeugaufnahmen jeweils entlang der Brücke bewegbar sind und jeweils einen Werkzeugkopf aufnehmen können.

Ein Schritt des Verfahrens sieht eine Auswahl eines bestimmten Verpackungsprozesses aus mehreren unterschiedlichen Verpackungsprozessen vor, welche mehreren unterschiedlichen Verpackungsprozesse eine den mindestens zwei an der Brücke angeordneten Werkzeugaufnahmen selektiv eine Bestückung mit einem jeweiligen Werkzeugkopf zuordnen. Die Auswahl des bestimmten Verpackungsprozesses kann über eine Steuer- und/oder Regeleinrichtung erfolgen, welche zur Auswahl des bestimmten Verpackungsprozesses ein Bedienfeld bereitstellt.

Ein weiterer Schritt sieht ein Durchführen des ausgewählten Verpackungsprozesses über den Verpackungsroboter vor, wobei der Verpackungsroboter mittels der entsprechend dem ausgewählten Verpackungsprozess mit Werkzeugköpfen bestückten Werkzeugaufnahmen den ausgewählten Verpackungsprozess durchführt und hierzu die bestückten Werkzeugaufnahmen zusammen mit den Werkzeugköpfen bzw. zusammen mit den hieran angeordneten Werkzeugköpfen entlang der Brücke bewegt.

Es ist vorgesehen, dass wenigstens eine Werkzeugaufnahme der mindestens zwei Werkzeugaufnahmen unter Verbleib an der Brücke bedarfsweise in einen Stand-by-Modus bzw. in einen Bereitschaftsmodus wechselt, in welchem Stand-by-Modus bzw. in welchem Bereitschaftsmodus die wenigstens eine Werkzeugaufnahme während des Durchführens des ausgewählten Verpackungsprozesses verbleibt, sofern der jeweilige ausgewählte Verpackungsprozess keine Bestückung der wenigstens einen Werkzeugaufnahme mit einem Werkzeugkopf erfordert.

Weiter kann es sein, dass die wenigstens eine Werkzeugaufnahme während des Durchführens des ausgewählten Verpackungsprozesses im Stand-by-Modus unbeweglich in einer Warteposition an der Brücke verbleibt.

Auch ist vorstellbar, dass die wenigstens eine Werkzeugaufnahme mittels eines Pneumatikzylinders und/oder mittels eines Servoantriebs in die Warteposition überführt wird. Alternativ hierzu haben sich Ausführungsformen bewährt, bei welchen die wenigstens eine Werkzeugaufnahme mittels eines Linearmotors in die Warteposition überführt wird.

Denkbar ist, dass die wenigstens eine Werkzeugaufnahme der mindestens zwei Werkzeugaufnahmen, welche sich im Stand-by-Modus befindet, während des Durchführens des ausgewählten Verpackungsprozesses zusammen mit den verbleibenden Werkzeugaufnahmen mitbewegt wird.

Auch kann es sein, dass die mittels des ausgewählten Verpackungsprozesses mit Werkzeugköpfen bestückten Werkzeugaufnahmen ihren jeweiligen Werkzeugkopf während des Durchführens des ausgewählten Verpackungsprozesses mit vorzugsweise pneumatischer und/oder elektrischer Energie versorgen. Hierbei kann es sein, dass eine für einen Werkzeugkopf vorgesehene elektrische und/oder pneumatische Energieversorgung der wenigstens einen Werkzeugaufnahme während des Stand-by-Modus abgeschaltet oder deaktiviert wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 und 2 zeigen eine Ausführungsform einer Brücke, wie sie bei diversen Ausführungsformen eines erfindungsgemäßen Verpackungsroboters vorgesehen sein kann.
Figuren 3 und 4 zeigen jeweils schematische Ansichten einer Anlage zur Verpackung von Artikeln, bei welcher Ausführungsformen eines erfindungsgemäßen Verpackungsroboters Verwendung finden.
Figuren 5 und 6 zeigen jeweils schematische Ansichten einer weiteren Anlage zur Verpackung von Artikeln, bei welcher Ausführungsformen eines erfindungsgemäßen Verpackungsroboters Verwendung finden.
Fig. 7 zeigt im Flussdiagramm einzelne Schritte, wie sie bei einer Ausführungsform eines erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der nachfolgenden Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise des erfindungsgemäßen Verpackungsroboters ein besseres Verständnis für den in den Ansprüchen sowie im allgemeinen Teil der Beschreibung allgemeiner und/oder abstrakter formulierten Erfindungsgedanken abzuleiten.

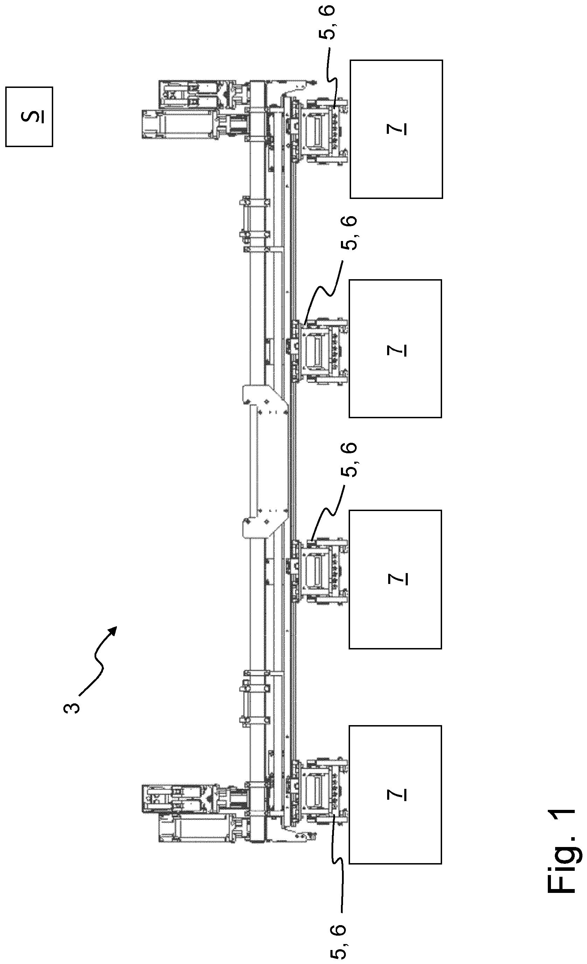

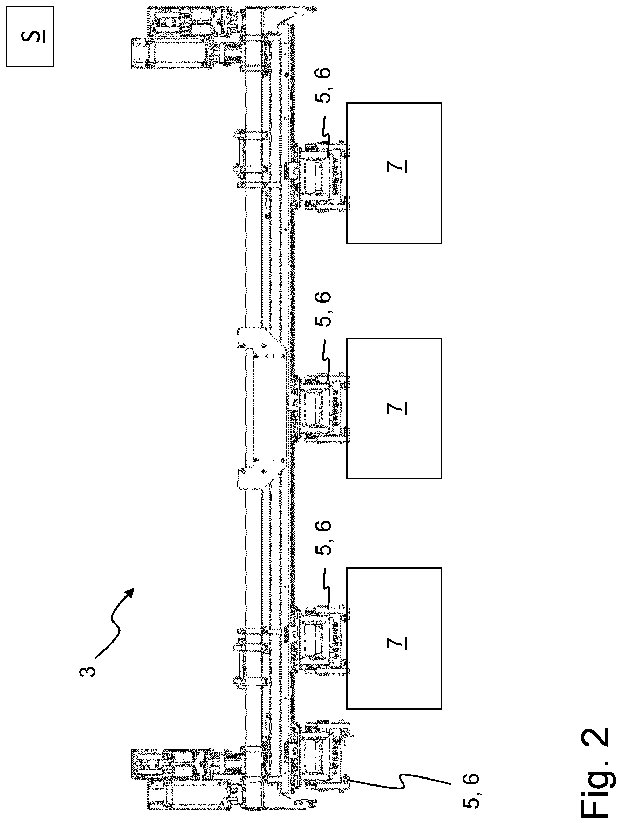

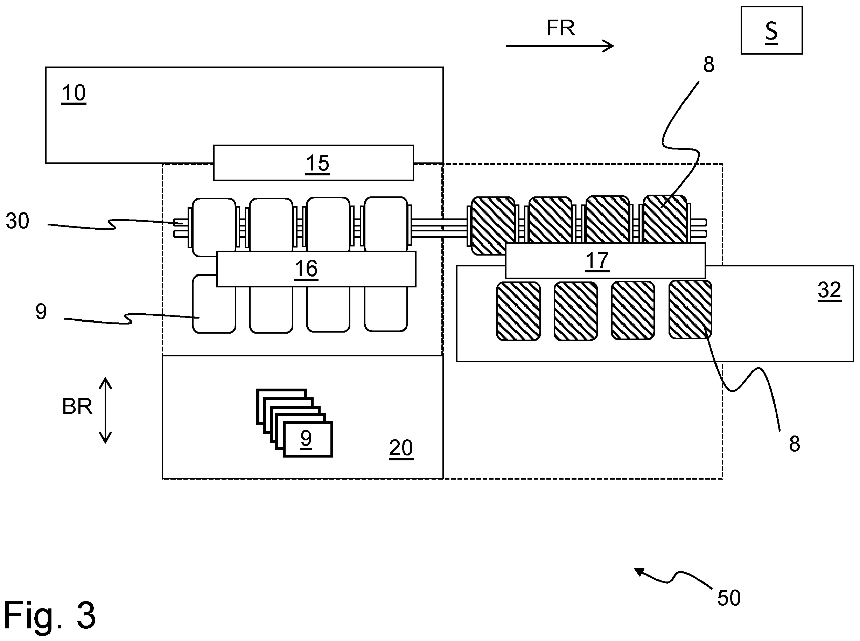

Die Figuren 1 und 2 zeigen eine Ausführungsform einer Brücke 3, wie sie bei diversen Ausführungsformen eines erfindungsgemäßen Verpackungsroboters 15, 16, 17 (vgl. Figuren 3 bis 6) vorgesehen sein kann. An der Brücke 3 sind vorliegend vier Werkzeugaufnahmen 5 angeordnet, die jeweils als Schnellwechselmechanismus 6 ausgebildet sind und jeweils einen Werkzeugkopf 7 tragen.

Die Werkzeugköpfe 7 sind lediglich schematisch angedeutet und können jeweils mehrere via Unterdruck ansteuerbare Sauginstrumente besitzen, welche Getränkebehälter zum Überführen in eine jeweilige Umverpackung entgegennehmen. Auch können die Werkzeugköpfe 7 jeweils ein Arbeitswerkzeug umfassen, welches eine jeweilige gefaltete Umverpackung 9 (vgl. Figuren 3 bis 6) erfassen und aufziehen kann.

Die in Fig. 1 dargestellte Konfiguration der Brücke 3 mit vier Werkzeugaufnahmen 5 und vier hieran angeordneten Werkzeugköpfen 7 ist zur Durchführung eines Verpackungsprozesses vorgesehen, wie er aus der schematischen Ansicht nach Fig. 3 deutlich wird.

Die schematische Ansicht der Fig. 3 zeigt eine Anlagenaufstellung 50, welche durch Getränkebehälter ausgebildete Artikel verpacken kann. Hierzu umfasst die Anlage zur Verpackung von Artikeln 50 drei Verpackungsroboter 15, 16 und 17. Jeder dieser Verpackungsroboter 15, 16 und 17 umfasst eine Brücke 3 mit genau vier hieran angeordneten Werkzeugaufnahmen 5, welche entsprechend Fig. 1 jeweils einen Werkzeugkopf 7 tragen.

Die Verpackungsroboter 15, 16 und 17 sind zudem jeweils als Portalsystem ausgebildet und können die Brücke 3 somit zusammen mit den Werkzeugaufnahmen 5 und den an den Werkzeugaufnahmen 5 angeordneten Werkzeugköpfen 7 als Portalsystem bewegen.

Die Brücke 3 wird somit als Bestandteil eines Portalsystems geführt und kann zur Verpackung von Artikeln zusammen mit den an der Brücke 3 angeordneten Werkzeugaufnahmen 5 und den hieran angeordneten Werkzeugköpfen 7 bewegt werden.

Im Hinblick auf die schematische Ansicht nach Fig. 1 können die Werkzeugaufnahmen 5 zusammen mit den Werkzeugköpfen 7 in Richtung und Gegenrichtung der Bildebene bewegt werden, indem der als Portalsystem ausgebildete Verpackungsroboter 15, 16 und 17 die Brücke 3 entsprechend verfährt. Diese Richtung, entlang welcher das Portalsystem die Brücke 3 hin und her bewegt, ist in Fig. 3 mittels Pfeildarstellung als Bewegungsrichtung BR angedeutet.

Bei der Anlage zur Verpackung von Artikeln 50, wie sie in Fig. 3 dargestellt ist, umfasst der Verpackungsroboter 15 vier Werkzeugköpfe 7, welche an jeweils einem Werkzeugträger 5 angeordnet sind und von einer Brücke 3 entsprechend Fig. 1 getragen werden. Die Werkzeugköpfe 7 des Verpackungsroboters 15 umfassen jeweils mehrere pneumatische ansteuerbare Sauginstrumente, welche jeweils Getränkebehälter zum Einbringen in die mit der Bezugsziffer 9 bezeichneten Umverpackungen temporär via Unterdruck entgegennehmen können.

Jeder der vier Werkzeugköpfe 7 kann hierbei eine Anzahl an Getränkebehältern entgegennehmen, welche genau einer Anzahl an Getränkebehältern entspricht, die in genau eine zugeordnete Umverpackung 9 eingebracht werden sollen. Somit arbeitet der Verpackungsroboter 15 taktweise und nimmt in jeweils einem Takt eine Anzahl an Getränkebehältern entgegen, welche in vier zugeordnete Umverpackungen 9 eingebracht werden sollen, transportiert diese in Richtung der vier Umverpackungen 9 und bringt diese Getränkebehälter sodann in Richtung von oben kommend in die vier Umverpackungen 9 ein.

Werden mittels der Anlage zur Verpackung von Artikeln 50 beispielsweise Gebinde 8 hergestellt, welche genau sechs Getränkebehälter umfassen, so werden mittels der Werkzeugköpfe 7 des Verpackungsroboters 15 jeweils genau sechs Getränkebehälter entgegengenommen. Diese Getränkebehälter werden über einen Zulauf 10 bereitgestellt, welcher die Getränkebehälter in mehreren parallelen Reihen entlang der Förderrichtung FR führt und hierzu ggf. mehrere Gassenbleche umfassen kann, welche die mehreren parallelen Reihen bilden.

Der Verpackungsroboter 16 umfasst ebenso wie der Verpackungsroboter 15 eine Brücke 3, an welcher genau vier Werkzeugaufnahmen 5 angeordnet sind, bei welchen es sich jeweils um einen Schnellwechselmechanismus 6 handelt. An den Werkzeugaufnahmen 5 des Verpackungsroboters 16 sind entsprechend der Darstellung nach Fig. 1 ebenso genau vier Werkzeugköpfe 7 angeordnet.

Auch die Werkzeugaufnahmen 5 des Verpackungsroboters 16 können zusammen mit den hieran angeordneten Werkzeugköpfen 7 in Richtung und Gegenrichtung der in Fig. 3 mittels Pfeildarstellung angedeuteten Bewegungsrichtung BR bewegt werden, indem die Brücke 3 über das Portalsystem entsprechend verfahren wird. Im Gegensatz zu dem Verpackungsroboter, der in Fig. 3 mit der Bezugsziffer 15 bezeichnet ist, sind die Werkzeugköpfe 7 bei dem Verpackungsroboter 16 mit Arbeitsinstrumenten ausgestattet, über welche die Werkzeugköpfe 7 des Verpackungsroboters 16 gefaltete Umverpackungen 9 aus dem Magazin 20 entnehmen, die gefalteten Umverpackungen 9 aufziehen und sodann auf der Horizontalfördereinrichtung 30 absetzen können.

Hierzu bewegt der Verpackungsroboter 16 seine Brücke 3 zwischen dem Magazin 20 und der Horizontalfördereinrichtung 30 hin und her. Auch der Verpackungsroboter 16 arbeitet taktweise und kann sodann in einem Schritt genau vier Umverpackungen 9 aus dem Magazin 20 entnehmen, diese vier aus dem Magazin 20 entnommenen Umverpackungen 9 sodann aufziehen, in Richtung der Horizontalfördereinrichtung 30 bewegen und zumindest näherungsweise zeitgleich auf der Horizontalfördereinrichtung 30 absetzen.

Die Konfiguration des Verpackungsroboters 15 ist hierbei auf die Konfiguration des Verpackungsroboters 16 abgestimmt. Wie bereits erwähnt, kann der Verpackungsroboter 16 zeitgleich genau vier Umverpackungen 9 aus dem Magazin 20 entnehmen, aufziehen und sodann auf der Horizontalfördereinrichtung 30 absetzen. Der Verpackungsroboter 15 kann zeitgleich genau vier Zusammenstellungen an Artikeln, welche in diese vier Umverpackungen 9 eingebracht werden sollen, vom Zulauf 10 entgegennehmen, zur Horizontalfördereinrichtung 30 bewegen und sodann in die genau vier Umverpackungen 9 einbringen, welche vom Verpackungsroboter 16 hierzu bereits auf der Horizontalfördereinrichtung 30 abgesetzt wurden.

Zusammen mit den eingebrachten Artikeln werden die Umverpackungen 9 mittels der Horizontalfördereinrichtung 30 in den Arbeitsbereich des Verpackungsroboters 17 bewegt. Auch der Verpackungsroboter 17 ist als Portalsystem ausgebildet und verfügt über eine Brücke 3, welche der als Portalsystem ausgebildete Verpackungsroboter 17 in Bewegungsrichtung BR zwischen der Horizontalfördereinrichtung 30 und der weiteren Horizontalfördereinrichtung 32 hin und her bewegen kann.

An der Brücke 3 des als Portalsystem ausgebildeten Verpackungsroboters 17 sind wiederum genau vier Werkzeugaufnahmen 5 angeordnet, an welchen sich genau vier Werkzeugköpfe 7 befinden. Mittels eines Taktes kann der Verpackungsroboter 17 hierdurch wiederum vier Umverpackungen 9 mit eingebrachten Artikeln bzw. vier Gebinde 8 zeitgleich von der Horizontalfördereinrichtung 30 entgegennehmen, in Richtung der weiteren Horizontalfördereinrichtung 32 bewegen und auf der weiteren Horizontalfördereinrichtung 32 absetzen.

Nach Absetzen dieser vier Umverpackungen 9 mit den eingebrachten Artikeln bzw. Getränkebehältern auf der weiteren Horizontalfördereinrichtung 32 kann der Verpackungsroboter 17 die Brücke 3 in Richtung der Horizontalfördereinrichtung 30 zurückbewegen und dort im Rahmen eines weiteren Taktes erneut vier weitere Umverpackungen 9 mit eingebrachten Artikeln entgegennehmen. Auch die Konfiguration des Verpackungsroboters 17 ist somit auf die Konfiguration des Verpackungsroboters 15 und auf die Konfiguration des Verpackungsroboters 16 jeweils abgestimmt.

Die beschriebene Funktionsweise der Anlage zur Verpackung von Artikeln 50, wie sie in Fig. 3 ausgebildet ist, lässt somit erkennen, dass die Verpackungsroboter 15, 16 und 17 jeweils derart konfiguriert sein müssen, dass mittels der Verpackungsroboter 15, 16 und17 gemeinsam ein vorgegebener Verpackungsprozess durchgeführt werden kann, welcher einem bestimmten Format entspricht. Sofer der Verpackungsprozess bzw. das Format geändert wird, kann es ggf. sein, dass eine Anlage zur Verpackung von Artikeln 50 entsprechend einer Konfiguration nach Fig. 3 diesen Verpackungsprozess nicht durchführen kann oder einen verminderten Durchsatz besitzt.

Es ist daher bei einer Änderung des Verpackungsprozesses in der Praxis häufig notwendig, dass die jeweilige Brücke 3 der Verpackungsroboter 15, 16 und 17 ausgetauscht wird, wozu umständliche Umrüstarbeiten erforderlich sind und ein über eine Anlage zur Verpackung von Artikeln 50 durchzuführender Verpackungsprozess bis zur vollständigen Umrüstung zum Erliegen kommt.

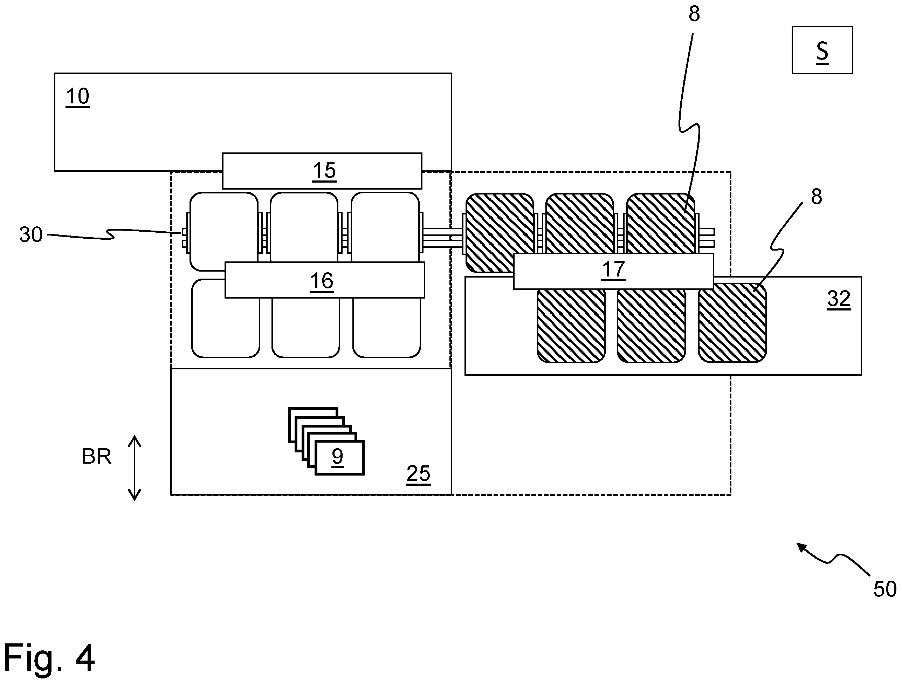

In der schematischen Darstellung der Fig. 4 ist zu erkennen, dass für die Anlage zur Verpackung von Artikeln 50 nach Fig. 3 eine Konfigurationsänderung bzw. ein Formatwechsel durchgeführt wurde. Über den Zulauf 10 werden weiterhin Artikel bzw. Getränkebehälter in mehreren parallelen Reihen bereitgestellt und in einen Arbeitsbereich des Verpackungsroboters 15 transportiert. Der Verpackungsroboter 15 nimmt bei der Konfiguration einer Anlage zur Verpackung von Artikeln 50 nach Fig. 4 weiterhin Getränkebehälter vom Zulauf 10 entgegen, transportiert diese in Richtung der Horizontalfördereinrichtung 30 und bringt die Getränkebehälter sodann in zugeordnete Umverpackungen 9 ein.

Wie bereits erläutert, werden bei der Anlage zur Verpackung von Artikeln 50 nach Fig. 3 zeitgleich mehrere Getränkebehälter in einer Anzahl vom Zulauf 10 entgegengenommen, welche zum Einbringen in genau vier Umverpackungen 9 im Rahmen eines Arbeitstaktes vorgesehen sind.

Bei der Konfiguration einer Anlage zur Verpackung von Artikeln 50 nach Fig. 4 ist hingegen vorgesehen, dass der Verpackungsroboter 15 Getränkebehälter in einer Anzahl vom Zulauf 10 entgegennimmt, welche Getränkebehälter in dieser Anzahl im Rahmen eines Arbeitstaktes in genau drei zugeordnete Umverpackungen 9 eingebracht werden.

Hierzu umfasst der Verpackungsroboter 15 bei der Konfiguration einer Anlage zur Verpackung von Artikeln 50 entsprechend Fig. 4 eine Brücke 3, wie sie in Fig. 2 dargestellt ist. Diese schematische Darstellung der Fig. 2 verdeutlicht, dass an drei Werkzeugaufnahmen 5, welche jeweils als Schnellwechselmechanismus 6 ausgebildet sind, jeweils ein Werkzeugkopf 7 angeordnet ist. Über jeden dieser Werkzeugköpfe 7 kann jeweils eine Anzahl an Artikeln bzw. Getränkebehältern entgegengenommen werden, welche im Rahmen eines Arbeitstaktes in eine jeweils zugeordnete Umverpackung 9 eingebracht werden.

Ein vierter Werkzeugkopf, wie dies bei der Konfiguration einer Anlage zur Verpackung von Artikeln 50 nach Fig. 3 für die Verpackungsroboter 15, 16 und 17 jeweils erforderlich ist, kann bei der Konfiguration einer Anlage zur Verpackung von Artikeln 50 nach Fig. 4 entfallen.

Da bei der Konfiguration einer Anlage zur Verpackung von Artikeln 50 entsprechend Fig. 4 kein vierter Werkzeugkopf 7 erforderlich ist, um Artikel bzw. Getränkebehälter vom Zulauf 10 entgegenzunehmen und in eine entsprechende Umverpackung 9 einzubringen, befindet sich der Werkzeugträger 5, welcher in Fig. 2 ohne Werkzeugkopf 7 bzw. linksseitig dargestellt ist, in einem Stand-by-Modus, in welchem dieser Werkzeugträger 5 an der Brücke 3 verbleibt. Der Werkzeugträger 5 kann somit aus einem aktiven Modus, bei welchem der Werkzeugträger 5 während eines Verpackungsprozesses über einen Werkzeugkopf 7 Artikel entgegennimmt und in eine Umverpackung 9 einbringt, in einen Stand-by-Modus wechseln, wie es in Fig. 2 dargestellt ist.

Bei dem Ausführungsbeispiel einer Brücke 3 nach Figuren 1 und 2 zeichnet sich der Stand-by-Modus mitunter dadurch aus, dass der linksseitig dargestellte Werkzeugträger 5 in die in Fig. 2 gezeigte Warteposition fährt und in dieser Warteposition verbleibt, während der Verpackungsroboter 15 Getränkebehälter vom Zulauf 10 entgegennimmt, in Richtung der Horizontalfördereinrichtung 30 bewegt und sodann in eine zugeordnete Umverpackung 9 einbringt.

Sämtliche Werkzeugträger 5, welche entsprechend Figuren 1 und 2 an der Brücke 3 angeordnet sind, besitzen eigene Antriebe, die beispielsweise als Linearmotoren, Servomotoren oder als Pneumatikzylinder ausgebildet sein können. Über seinen eigenen Antrieb kann der Werkzeugträger 5, welcher für den jeweiligen durchzuführenden Verpackungsprozess nicht erforderlich ist, in die Warteposition nach Fig. 2 fahren und während des Durchführens des jeweiligen Verpackungsprozesses in der jeweiligen Warteposition verbleiben.

Bewährt hat es sich beispielsweise, wenn ein Benutzer der Steuer- und/oder Regeleinrichtung S vorgibt, welcher Verpackungsprozess von den Verpackungsrobotern 15, 16 und 17 bzw. von der Anlage zur Verpackung von Artikeln 50 durchgeführt werden soll. Die Steuer- und/oder Regeleinrichtung S kann sodann den jeweiligen eigenen Antrieb eines jeweiligen Werkzeugträgers 5 bedarfsweise ansteuern, so dass der jeweilige Werkzeugträger 5 selbständig in eine Warteposition fährt, wenn der jeweilige Werkzeugträger 5 bzw. ein hieran anzuordnender Werkzeugkopf 7 zum Durchführen des jeweiligen Verpackungsprozesses nicht erforderlich ist.

Während eines Betriebes des jeweiligen Verpackungsroboters 15, 16 und 17 werden die jeweiligen Werkzeugköpfe 7, welche an einer jeweiligen Werkzeugaufnahme 5 angeordnet sind, über die jeweilige Werkzeugaufnahme 5 mit Energie bzw. mit elektrischer oder pneumatischer Energie versorgt. Eine solche Versorgung eines Werkzeugkopfes 7 mit elektrischer oder pneumatischer Energie kann mittels der Steuer- und/oder Regeleinrichtung S für eine Werkzeugaufnahme 5 dann unterbunden werden, wenn sich die jeweilige Werkzeugaufnahme 5 im Stand-by-Modus befindet. Hierdurch kann verhindert werden, dass ein Werkzeugkopf 7 entsprechende Arbeiten ausführt, wenn dieser für den jeweiligen Verpackungsprozess nicht erforderlich ist bzw. wenn dieser an einer Werkzeugaufnahme 5 angeordnet ist, welche sich im Stand-by-Modus befindet.

In der Praxis ist es allerdings vorteilhaft, wenn der jeweilige Werkzeugkopf 7 von der jeweiligen Werkzeugaufnahme 5 abgenommen wird, wenn dieser für den jeweiligen Verpackungsprozess nicht benötigt wird. Fig. 2 verdeutlicht auch, dass sich die Werkzeugaufnahme 5 im Stand-by-Modus in einem Randbereich der Brücke 3 befindet, so dass ein ggf. noch an der Werkzeugaufnahme 5 angeordneter Werkzeugkopf 7 auf einfache Art und Weise von der Werkzeugaufnahme 5 abgenommen werden kann.

Da die Werkzeugaufnahmen 5 jeweils als Schnellwechselmechanismus 6 ausgebildet sind, kann eine Abnahme eines jeweiligen Werkzeugkopfes 7 von einer jeweiligen Werkzeugaufnahme 5 zudem zeitoptimiert erfolgen.

Die Fig. 4 lässt zudem erkennen, dass der Verpackungsroboter 16 in einem Takt jeweils drei Umverpackungen 9 aus dem Magazin 25 entnimmt und auf der Horizontalfördereinrichtung 30 absetzt. Weiter lässt Fig. 4 erkennen, dass der Verpackungsroboter 17 im Rahmen eines jeweiligen Taktes jeweils drei Gebinde 8 von der Horizontalfördereinrichtung 30 entgegennimmt und auf die Horizontalfördereinrichtung 32 überführt bzw. auf der Horizontalfördereinrichtung 32 absetzt.

Auch die Verpackungsroboter 16 und 17 benötigen zum Durchführen ihres jeweiligen Arbeitstaktes genau drei Werkzeugköpfe 7, wobei ein vierter Werkzeugkopf 7 entsprechend der Darstellung nach Fig. 1 nicht für die Konfiguration einer Anlage zum Verpacken von Artikeln 50 nach Fig. 4 erforderlich ist. Auch bei den Verpackungsrobotern 16 und 17 befindet sich daher jeweils genau eine Werkzeugaufnahme 5 in einem Stand-by-Modus und ist hierbei unbeweglich in einer Warteposition angeordnet, wie dies in Fig. 2 gezeigt ist. In die jeweilige Warteposition wird die jeweilige Werkzeugaufnahme 5 über einen eigenen Antrieb gebracht, welcher beispielsweise als Linearmotor, Servomotor oder als Pneumatikzylinder ausgebildet sein kann.

Die Konfigurationen der Verpackungsroboter 15, 16 und 17 sind somit auch bei der Anlage zur Verpackung von Artikeln 50 entsprechend Fig. 4 aufeinander abgestimmt.

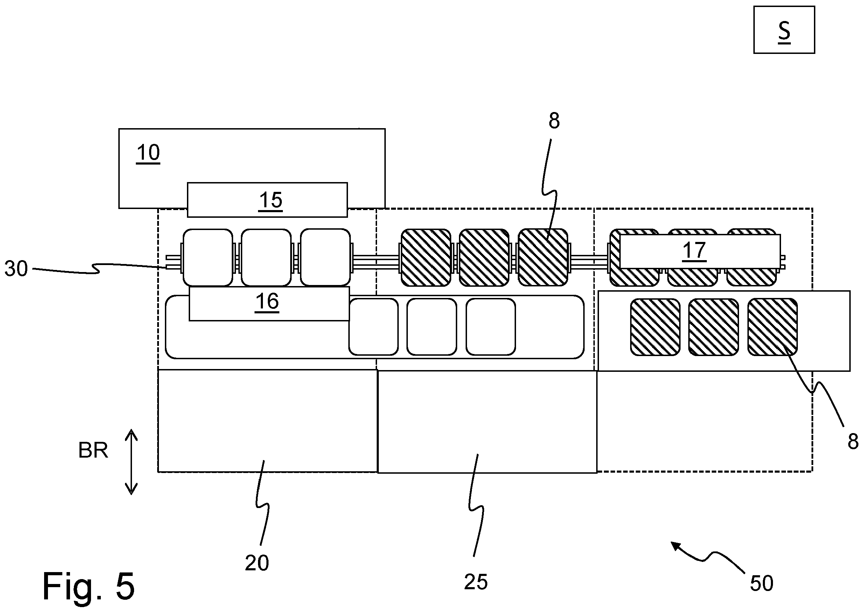

Die Fig. 5 zeigt eine schematische Ansicht einer weiteren Ausführungsform einer Anlage zur Verpackung von Artikeln 50. Die Konfiguration der Anlage zur Verpackung von Artikeln 50 entsprechend Fig. 5 entspricht der Konfiguration der Anlage zur Verpackung von Artikeln 50 nach Fig. 4. Bei der jeweiligen Brücke 3 der Verpackungsroboter 15, 16 und 17 befindet sich ein jeweiliger Werkzeugträger 5 daher in einem Stand-by-Modus und ist in einer jeweiligen Warteposition angeordnet. Eine elektrische oder hydraulische Versorgung eines Werkzeugkopfes 7 ist für diese Werkzeugaufnahme, welche sich im Stand-by-Modus befindet, jeweils deaktiviert.

Eine Zusammenschau der Figuren 4 und 5 lässt erkennen, dass die Ausführungsform der Anlage zur Verpackung von Artikeln 50 nach Fig. 5 ein erstes Magazin 20 und ein zweites Magazin 25 besitzt. Das erste Magazin 20 hat gefaltete Umverpackungen 9 aufgenommen, welche für einen Verpackungsprozess vorbereitet sind, bei welchem der Verpackungsroboter 16 zeitgleich vier Umverpackungen 9 aus dem Magazin 20 entnimmt, aufzieht und auf der Horizontalfördereinrichtung 30 absetzt. Das zweite Magazin 25 hat gefaltete Umverpackungen 9 aufgenommen, welche für einen Verpackungsprozess vorbereitet sind, bei welchem der Verpackungsroboter 16 zeitgleich genau drei Umverpackungen 9 aus dem Magazin 25 entnimmt, aufzieht und auf der Horizontalfördereinrichtung 30 absetzt.

In Abhängigkeit des jeweiligen durchzuführenden Verpackungsprozesses kann der Verpackungsroboter 16 wahlweise gefaltete Umverpackungen 9 aus dem ersten Magazin 20 oder aus dem zweiten Magazin 25 entnehmen. Sowohl das erste Magazin 20 als auch das zweite Magazin 25 befinden sich innerhalb eines Arbeitsbereichs des Verpackungsroboters 16, so dass deren Position nicht verändert werden muss, wenn zwischen den jeweiligen Verpackungsprozessen gewechselt wird. Ein Wechsel zwischen unterschiedlichen Verpackungsprozessen kann bei solchen Ausführungsformen schnell und unkompliziert erfolgen.

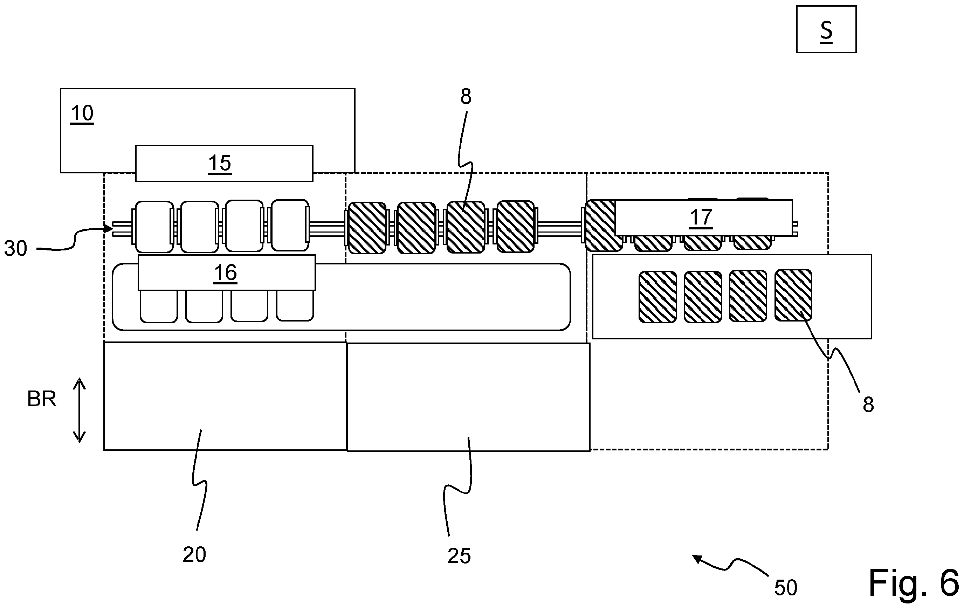

Eine Zusammenschau der Figuren 5 und 6 verdeutlicht einen solchen Wechsel. Während der Verpackungsroboter 16 in der in Fig. 5 dargestellten Anlage 50 noch im Rahmen eines jeweiligen Arbeitstaktes genau drei Umverpackungen 9 aus dem zweiten Magazin 25 entnimmt, aufzieht und auf der Horizontalfördereinrichtung 30 absetzt, werden bei der Konfiguration der Anlage zur Verpackung von Artikeln 50 entsprechend Fig. 6 im Rahmen eines jeweiligen Taktes genau vier Umverpackungen 9 aus dem ersten Magazin 20 entnommen, aufgezogen und sodann mittels des Verpackungsroboters 16 auf der Horizontalfördereinrichtung 30 abgesetzt.

Sowohl bei der Konfiguration der Anlage zur Verpackung von Artikeln 50 nach Fig. 5 als auch bei der Konfiguration der Anlage zur Verpackung von Artikeln nach Fig. 6 sind das erste Magazin 20 und das zweite Magazin 25 jeweils als Bestandteil der Anlage zur Verpackung von Artikeln 50 ausgebildet und bleiben als fester Bestandteil der Anlage zur Verpackung von Artikeln 50 bei einem Wechsel eines Verpackungsprozesses installiert ohne aus der Anlage zur Verpackung von Artikeln 50 entnommen zu werden.

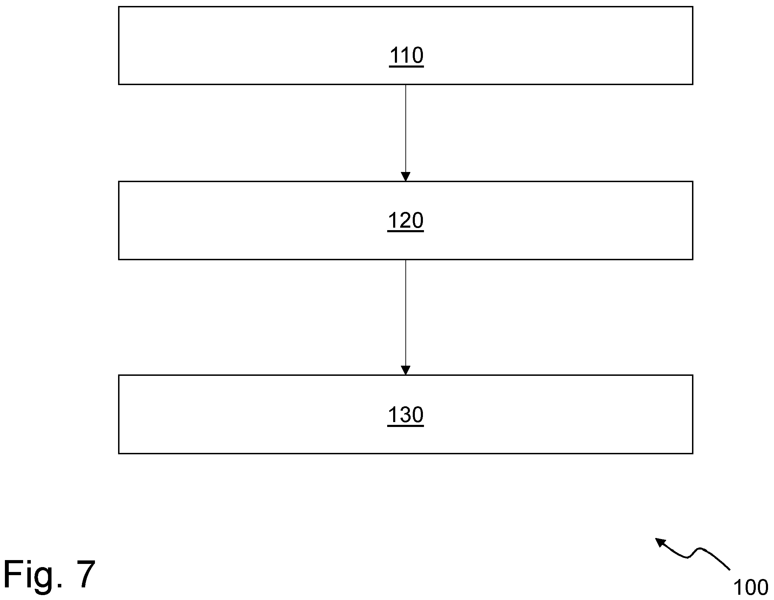

Die Fig. 7 zeigt im Flussdiagramm einzelne Schritte, wie sie bei einer Ausführungsform eines erfindungsgemäßen Verfahrens 100 vorgesehen sein können. Bei der Durchführung des Verfahrens, wie es in den einzelnen Schritten nach Fig. 7 dargestellt wird, ist ein Verpackungsroboter 15, 16 bzw. 17 mit einer Brücke 3 und mehreren an der Brücke 3 angeordneten Werkzeugaufnahmen 5 vorgesehen, welches mehreren an der Brücke 3 angeordneten Werkzeugaufnahmen 5 jeweils entlang der Brücke 3 bewegbar sind und jeweils einen Werkzeugkopf 7 aufnehmen können.

Im Rahmen eines ersten Verfahrensschrittes, der mit der Bezugsziffer 110 bezeichnet ist, wird ein bestimmter Verpackungsprozess aus mehreren unterschiedlichen Verpackungsprozessen ausgewählt, welche mehreren unterschiedlichen Verpackungsprozesse eine den mindestens zwei an der Brücke 3 angeordneten Werkzeugaufnahmen 5 selektiv eine Bestückung mit einem jeweiligen Werkzeugkopf 7 zuordnen. Die Auswahl des bestimmten Verpackungsprozesses erfolgt über eine Steuer- und/oder Regeleinrichtung S, welcher ein Benutzer Informationen zum jeweiligen durchzuführenden Verpackungsprozess vorgibt.

Im Rahmen eines nachfolgenden weiteren Schrittes 120 überprüft die Steuer- und/oder Regeleinrichtung S, für welche der Werkzeugaufnahmen 5 zum Durchführen des jeweiligen ausgewählten Verpackungsprozesses eine Bestückung mit einem jeweiligen Werkzeugkopf 7 erforderlich ist. Stellt die Steuer- und/oder Regeleinrichtung S fest, dass für eine der Werkzeugaufnahmen 5 oder für mehrere der Werkzeugaufnahmen 5 zum Durchführen des ausgewählten Verpackungsprozesses keine Bestückung mit einem Werkzeugkopf 7 erforderlich ist, so veranlasst die Steuer- und/oder Regeleinrichtung S im Schritt 120, dass diese Werkzeugaufnahme 5 oder diese mehreren Werkzeugaufnahmen 5 in einen Stand-by-Modus wechseln. Hierzu werden diese Werkzeugaufnahmen 5 oder ggf. diese eine Werkzeugaufnahme 5 in eine jeweilige Warteposition gefahren und sind hierbei weiterhin an der Brücke 3 angeordnet.

Auf den Schritt 120 folgt der Verfahrensschritt 130. In diesem Schritt 130 wird der Verpackungsprozess über den Verpackungsroboter 15, 16 bzw. 17 durchgeführt. Hierbei bewegt der Verpackungsroboter 15, 16 bzw. 17 die mit Werkzeugköpfen 7 bestückten Werkzeugaufnahmen 5 entlang der Brücke 3 und führt hierdurch einen zum Herstellen eines Gebindes 8 aus Artikeln notwendigen Verpackungsschritt durch. Hierbei kann es sein, dass der Verpackungsroboter 15, 16 bzw. 17 Artikel in Richtung einer Umverpackung 9 bewegt und in die jeweilige Umverpackung 9 einsetzt.

Auch kann es sein, dass der Verpackungsroboter 15, 16 bzw. 17 hierbei Umverpackungen 9 aus einem Magazin 20 bzw. 25 entnimmt, aufzieht und sodann auf einer Horizontalfördereinrichtung 30 absetzt. Während der Verpackungsprozess durchgeführt wird, befinden sich die Werkzeugaufnahmen 5, für welche zum Durchführen des ausgewählten Verpackungsprozesses keine Bestückung mit einem Werkzeugkopf 7 erforderlich ist, weiterhin im Stand-by-Modus, in welchen die Werkzeugköpfe 7 bereits vor Beginn des Verpackungsprozesses gewechselt hatten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 3: Brücke
- 5: Werkzeugaufnahme
- 6: Schnellwechselmechanismus
- 7: Werkzeugkopf
- 8: Gebinde
- 9: Umverpackung
- 10: Zulauf
- 15: Verpackungsroboter
- 16: Verpackungsroboter
- 17: Verpackungsroboter
- 20: Magazin, erstes Magazin
- 25: Magazin, zweites Magazin
- 30: Horizontalfördereinrichtung
- 32: Weitere Horizontalfördereinrichtung
- 50: Anlage zur Verpackung von Artikeln, Anlagenaufstellung
- 100: Verfahren
- 110: Verfahrensschritt, erster Verfahrensschritt
- 120: Verfahrensschritt, zweiter Verfahrensschritt
- 130: Verfahrensschritt, dritter Verfahrensschritt
- BR: Bewegungsrichtung
- FR: Förderrichtung
- S: Steuer- und/oder Regeleinrichtung

## Patentansprüche

1. Verpackungsroboter (15, 16, 17) für Artikel wie Getränkebehälter oder dergleichen, umfassend
- eine Brücke (3) sowie mindestens zwei an der Brücke (3) angeordnete Werkzeugaufnahmen (5), wobei die mindestens zwei an der Brücke (3) angeordneten Werkzeugaufnahmen (5) jeweils entlang der Brücke (3) bewegbar sind und jeweils einen Werkzeugkopf (7) aufnehmen können, der Verpackungsroboter (15, 16, 17) **dadurch gekennzeichnet, dass**
- wenigstens eine Werkzeugaufnahme (5) der mindestens zwei an der Brücke (3) angeordneten Werkzeugaufnahmen (5) abgestimmt auf den jeweiligen durchzuführenden Verpackungsprozess wahlweise mit einem jeweiligen Werkzeugkopf (7) bestückbar ist und wobei die wenigstens eine Werkzeugaufnahme (5) der mindestens zwei Werkzeugaufnahmen (5) derart ausgebildet ist, dass die wenigstens eine Werkzeugaufnahme (5) der mindestens zwei Werkzeugaufnahmen (5) unter Verbleib an der Brücke (3) in einen Stand-by-Modus wechseln kann, sofern der jeweilige über den Verpackungsroboter (15, 16, 17) durchzuführende Verpackungsprozess keine Bestückung der wenigstens einen Werkzeugaufnahme (5) mit einem Werkzeugkopf (7) erfordert.

2. Verpackungsroboter nach Anspruch 1, bei welchem die wenigstens eine Werkzeugaufnahme (5) der mindestens zwei an der Brücke (3) angeordneten Werkzeugaufnahmen (5) im Stand-by-Modus in einer Warteposition unbeweglich an der Brücke (3) angeordnet ist.

3. Verpackungsroboter nach Anspruch 2, umfassend mindestens einen Pneumatikzylinder, welcher mindestens eine Pneumatikzylinder die wenigstens eine Werkzeugaufnahme (5) in die Warteposition überführen kann, in welcher die wenigstens eine Werkzeugaufnahme (5) im Stand-by-Modus unbeweglich an der Brücke (3) angeordnet ist.

4. Verpackungsroboter nach Anspruch 2 oder Anspruch 3, umfassend mindestens einen Servoantrieb, welcher mindestens eine Servoantrieb die wenigstens eine Werkzeugaufnahme (5) in die Warteposition überführen kann, in welcher die wenigstens eine Werkzeugaufnahme (5) im Stand-by-Modus unbeweglich an der Brücke (3) angeordnet ist.

5. Verpackungsroboter nach einem der Ansprüche 1 bis 4, bei welchem den mindestens zwei an der Brücke (3) angeordneten Werkzeugaufnahmen (5) jeweils ein eigener Antrieb zugeordnet ist, welcher als Pneumatikzylinder ausgebildet ist und über welchen jeweiligen eigenen Antrieb die mindestens zwei an der Brücke (3) angeordneten Werkzeugaufnahmen (5) jeweils in eine Warteposition gebracht werden können.

6. Verpackungsroboter nach einem der Ansprüche 1 bis 5, bei welchem den mindestens zwei an der Brücke (3) angeordneten Werkzeugaufnahmen (5) jeweils ein eigener Antrieb zugeordnet ist, welcher als Servoantrieb ausgebildet ist und über welchen jeweiligen eigenen Antrieb die mindestens zwei an der Brücke (3) angeordneten Werkzeugaufnahmen (5) jeweils in eine Warteposition gebracht werden können.

7. Verpackungsroboter nach Anspruch 1, bei welchem die wenigstens eine Werkzeugaufnahme (5) der mindestens zwei Werkzeugaufnahmen (5) im Stand-by-Modus entlang der Brücke (3) bewegbar ausgebildet ist.

8. Verpackungsroboter nach einem der Ansprüche 1 bis 7, bei welchem die mindestens zwei an der Brücke (3) angeordneten Werkzeugaufnahmen (5) jeweils eine vorzugsweise elektrische und/oder pneumatische Energieversorgung für einen Werkzeugkopf (7) bereitstellen können, wobei die wenigstens eine Werkzeugaufnahme (5) derart ausgebildet ist, dass die für den jeweiligen Werkzeugkopf (7) bereitstellbare vorzugsweise pneumatische und/oder elektrische Energieversorgung im Stand-by-Modus abgeschaltet oder deaktiviert ist.

9. Verpackungsroboter nach einem der Ansprüche 1 bis 8, bei welchem die wenigstens eine Werkzeugaufnahme (5) einen Schnellwechselmechanismus (6) umfasst, über welchen Schnellwechselmechanismus (6) ein Werkzeugkopf (7) vorzugsweise werkzeuglos an der wenigstens einen Werkzeugaufnahme (5) angeordnet werden kann und/oder über welchen Schnellwechselmechanismus (6) ein Werkzeugkopf (7) vorzugsweise werkzeuglos von der wenigstens einen Werkzeugaufnahme (5) abgenommen werden kann.

10. Verpackungsroboter nach einem der Ansprüche 1 bis 9, welcher als Portalsystem ausgebildet ist und welcher die Brücke (3) im Rahmen eines Arbeitstaktes zusammen mit den hieran angeordneten Werkzeugköpfen (7) entlang eines vorgegebenen Arbeitsweges hin und her bewegen kann.

11. Verfahren (100) zum Durchführen eines Verpackungsprozesses für Artikel wie Getränkebehälter oder dergleichen, bei welchem Verfahren (100) ein Verpackungsroboter (15, 16, 17) mit einer Brücke (3) sowie mindestens zwei an der Brücke (3) angeordneten Werkzeugaufnahmen (5) vorgesehen ist, welche mindestens zwei an der Brücke (3) angeordneten Werkzeugaufnahmen (5) jeweils entlang der Brücke (3) bewegbar sind und jeweils einen Werkzeugkopf (7) aufnehmen können, das Verfahren (100) umfassend folgende Schritte:
- Auswahl eines bestimmten Verpackungsprozesses aus mehreren unterschiedlichen Verpackungsprozessen, welche mehreren unterschiedlichen Verpackungsprozesse den mindestens zwei an der Brücke (3) angeordneten Werkzeugaufnahmen (5) selektiv eine Bestückung mit einem jeweiligen Werkzeugkopf (7) zuordnen,
- Durchführen des ausgewählten Verpackungsprozesses über den Verpackungsroboter (15, 16, 17), wobei der Verpackungsroboter (15, 16, 17) mittels der entsprechend dem ausgewählten Verpackungsprozess mit Werkzeugköpfen (7) bestückten Werkzeugaufnahmen (5) den ausgewählten Verpackungsprozess durchführt und hierzu die bestückten Werkzeugaufnahmen (5) zusammen mit den Werkzeugköpfen (7) entlang der Brücke (3) bewegt, das Verfahren **dadurch gekennzeichnet, dass**
- wenigstens eine Werkzeugaufnahme (5) der mindestens zwei Werkzeugaufnahmen (5) unter Verbleib an der Brücke (3) bedarfsweise in einen Stand-by-Modus wechselt, in welchem Stand-by-Modus die wenigstens eine Werkzeugaufnahme (5) während des Durchführens des ausgewählten Verpackungsprozesses verbleibt, sofern der jeweilige ausgewählte Verpackungsprozess keine Bestückung der wenigstens einen Werkzeugaufnahme (5) mit einem Werkzeugkopf (7) erfordert.

12. Verfahren nach Anspruch 11, bei welchem die wenigstens eine Werkzeugaufnahme (5) der mindestens zwei Werkzeugaufnahmen (5) während des Durchführens des ausgewählten Verpackungsprozesses im Stand-by-Modus unbeweglich in einer Warteposition an der Brücke (3) verbleibt.

13. Verfahren nach Anspruch 12, bei welchem die wenigstens eine Werkzeugaufnahme (5) mittels eines Pneumatikzylinders in die Warteposition überführt wird.

14. Verfahren nach Anspruch 12, bei welchem die wenigstens eine Werkzeugaufnahme (5) mittels eines Servoantriebs in die Warteposition überführt wird.

15. Verfahren nach Anspruch 11, bei welchem die wenigstens eine Werkzeugaufnahme (5) der mindestens zwei Werkzeugaufnahmen (5), welche sich im Stand-by-Modus befindet, während des Durchführens des ausgewählten Verpackungsprozesses zusammen mit den verbleibenden Werkzeugaufnahmen (5) mitbewegt wird.

16. Verfahren nach einem der Ansprüche 11 bis 15, bei welchem die mittels des ausgewählten Verpackungsprozesses mit Werkzeugköpfen (7) bestückten Werkzeugaufnahmen (5) ihren jeweiligen Werkzeugkopf (7) während des Durchführens des ausgewählten Verpackungsprozesses mit vorzugsweise pneumatischer und/oder elektrischer Energie versorgen und bei welchem eine für einen Werkzeugkopf (7) vorgesehene vorzugsweise elektrische und/oder pneumatische Energieversorgung der wenigstens einen Werkzeugaufnahme (5) während des Stand-by-Modus abgeschaltet wird.
